(19) Europäisches Patentamt
European Patent Office
Office européen des brevets

(11) **EP 2 626 999 B1**

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(51) Int Cl.:
*H02P 21/00* $^{(2006.01)}$    *H02P 21/13* $^{(2006.01)}$
*H02P 23/14* $^{(2006.01)}$

(21) Anmeldenummer: **12154863.0**

(22) Anmeldetag: **10.02.2012**

(54) **Antriebsregelung für eine elektrische Maschine und Verfahren zum Regeln einer elektrischen Maschine**

Drive regulator for an electric machine and method for regulating an electrical machine

Réglage de l'entraînement pour une machine électrique et procédé de réglage d'une machine électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.08.2013 Patentblatt 2013/33**

(73) Patentinhaber: **Siemens Aktiengesellschaft 80333 München (DE)**

(72) Erfinder: **Künzel, Stefan 91056 Erlangen (DE)**

(56) Entgegenhaltungen:
**DE-A1- 10 206 191        DE-A1-102006 006 032
DE-A1-102009 043 598    JP-A- 11 027 996
JP-A- 2007 124 722**

## Beschreibung

Die Erfindung betrifft eine Antriebsregelung für eine elektrische Maschine, durch welche eine Betriebsgröße der elektrischen Maschine geregelt wird, also bei einer Drehfeldmaschine beispielsweise ein momentenbildender Anteil eines Drehstroms. Eine Antriebsregelung der genannten Art wird beispielsweise von dem Unternehmen SIEMENS AG unter dem Produktnamen "SINAMICS" angeboten. Bei einer Antriebsregelung ist ein Sollwert für diese Betriebsgröße an einem Sollwerteingang vorgebbar. Zu dem Sollwert wird dann durch eine Reglereinrichtung der Antriebsregelung ein Regelsignal oder Regelwert an einem Stellausgang erzeugt, über welchen dann eine Stellgröße der elektrischen Maschine eingestellt wird. Zu der Erfindung gehört auch ein entsprechendes Verfahren zum Regeln der Betriebsgröße und ein Computerprogrammprodukt, durch welches das Regelverfahren mittels einer Prozessoreinrichtung einer Antriebsregelung durchführbar ist.

Eine Antriebsregelung erzeugt an ihrem Stellausgang Stellsignale zum Steuern eines Stromrichters oder Wechselrichters, um in Spulen der elektrischen Maschine einen Stromfluss hervorzurufen. Im Zusammenhang mit Drehfeldmaschinen wird hierbei durch abwechselndes Bestromen der Spulen, beispielsweise in einem Stator, ein Drehfeld in der elektrischen Maschine erzeugt, dem dann der Rotor der Maschine folgt. Das hierbei auf den Rotor wirkende Drehmoment ist abhängig von dem sog. momentenbildenden Anteil des Spulenstroms. Durch die Antriebsregelung kann als eine einzuregelnde Betriebsgröße das Drehmoment, die Drehzahl des Rotors oder auch unmittelbar der momentenbildende Anteil des Stromes auf einen entsprechenden Sollwert eingeregelt werden. Die Antriebsregelung kann auch mehrere Regler aufweisen, die dann z.B. als eine Reglerkaskade zusammenwirken.

Bei der Regelung für Drehfeldmotoren wird üblicherweise das Verfahren der Feldorientierung verwendet, das auch als Vektorregelung oder als feldorientierte Regelung bezeichnet wird. Eine Regelung hat im Gegensatz zu einer Steuerung den Vorteil, dass unbekannte oder nur schwer modellierbare Störgrößen, wie etwa Reibung, nicht explizit für die Regelung nachgebildet werden müssen. Durch den steten Abgleich mit dem Istwert der zu regelnden Betriebsgröße ist eine Regelung in der Lage, die elektrische Maschine auf den vorgegebenen Sollwert einzuregeln und hierbei den Einfluss auch der unbekannten Störgrößen selbständig zu kompensieren. Nachteilig bei der Verwendung einer Regelung ist allerdings, dass sie verzögert auf eine Veränderung der Sollwertvorgabe bzw. eine Veränderung des Lastmoments reagiert. Grund dafür ist, dass die Messeinrichtung zum Ermitteln des Istwerts oftmals den Istwert über eine Integralbildung aus einer anderen Messgröße schließen muss, wodurch sich bei einer digitalen Regelung zwingend eine Verzögerung um z.B. einen Abtastwert ergibt. Des Weiteren neigt eine hochdynamische Regelung zum Überschwingen beim Einregeln der Betriebsgröße. Um dies zu vermeiden kann die Regelung nur in der Weise betrieben werden, dass sie den Istwert über mehrere Takte hinweg allmählich auf den Sollwert einregelt. Mit anderen Worten muss die Bandbreite der Regelung im Führungsverhalten begrenzt werden.

Um die Bandbreite im Führungsverhalten einer Regelung im Allgemeinen zu vergrößern, d.h. nach einem Sollwertsprung die Zeitdauer zum Einregeln einer Betriebgröße zu verringern, ist allgemein die Verwendung einer sog. Vorsteuerung bekannt. Eine Vorsteuerung empfängt, wie auch die Regeleinrichtung, den Sollwert und steuert die Stellgröße der elektrischen Maschine ohne eine Rückkopplung direkt auf den Wert, der zum Erreichen des neuen Sollwerts nötig ist. Allerdings funktioniert eine derartige Vorsteuerung nur gut, wenn das erzeugte Stellsignal nicht begrenzt werden muss.

Elektrische Maschinen werden in der Regel an einem elektrischen Versorgungsnetz über einen Frequenzumrichter betrieben. Die der elektrischen Maschine zuführbare elektrische Spannung ist hierbei unter anderem durch den Zwischenkreis begrenzt. Um mittels einer Stromregelung eine schnelle Drehzahländerung bei der elektrischen Maschine zu erreichen oder auf einen großen Lastsprung mit einer abrupten Änderung des Drehmoments reagieren zu können, also ein schnelles Führungsverhalten der Stromregelung zu erzielen, ist es in der Regel nötig, der elektrischen Maschine aus dem Zwischenkreis, oder allgemein der elektrischen Leistungsversorgung, eine Wechselspannung mit einer sehr großen Amplitude zuzuführen. Dies sorgt dann dafür, dass der Strom in der elektrischen Maschine schnell genug ansteigt, um der Änderung der Drehzahl bzw. des Drehmoments zu entsprechen.

Soll diese schnelle Stromänderung durch eine Stromregelung mit einer Vorsteuerung erreicht werden und reicht aber die tatsächlich verfügbare Spannung des Zwischenkreises nicht aus, um die von der Vorsteuerung eingestellte Stellgröße tatsächlich zu realisieren, so wirkt diese Spannungsbegrenzung als die erwähnte Begrenzung des Stellsignals. Hierdurch verschlechtert sich dann das Führungsverhalten der Stromregelung deutlich. Der entstehende Steuerungsfehler muss nämlich vom Regler ausgeregelt werden. Dieser kann aber nur verzögert reagieren, da er während der Vorsteuerung nicht auf die Sollwertänderung reagieren darf. Insgesamt kann das Führungsverhalten der Antriebsregelung hierdurch schlechter sein als es sich bei einer Verwendung eines Reglers allein, d.h. ohne eine Vorsteuerung, ergeben würde.

Eine ähnliche Verschlechterung durch eine Vorsteuerung kann sich bei einer Drehzahlregelung einer elektrischen Maschine ergeben, wenn das maximal von der elektrischen Maschine erzeugbare Drehmoment z.B. aufgrund von mechanischen Belastungsgrenzen kleiner als das von der Vorsteuerung benötigte Drehmoment ist. Aus der EP 0 568 712 A1 ist in diesem Zusammenhang eine Vorsteuerung zum Berechnen eines Vorsteuerdrehmoments bekannt. Bei der in diesem Dokument beschriebenen Form der Vorsteuerung ist die Begrenzung der Vorsteuerung nicht vom Betriebspunkt der elektrischen Maschine abhängig und kann damit im Voraus berücksichtigt werden, so dass das Führungsverhalten nicht in der beschriebenen Weise degeneriert.

In der DE 10 2009 043 598 A1 ist ein Verfahren zum Regeln eines Umrichters beschrieben. Ein Sollvektor wird einer Vorsteuereinheit zugeführt, welche ausgehend von Soll-Stromgrößen stationäre Stellspannungen berechnet. Aus den stationären Stellspannungen wird ein Stellspannungsvektor erzeugt. Der Stellspannungsvektor wird einer Beobachtereinheit zugeführt, welche mittels eines mathematischen Modells des Umrichters unverzögerte Zustands-Stromwerte vorhersagt und diese einer Regelungseinheit zur Verfügung stellt.

In der DE 10 2006 006 032 A1 sind ein Verfahren und eine Vorrichtung zum Betreiben einer Synchronmaschine beschrieben. Einer Vorsteuerung wird ein Sollwert zugeführt, aus dem die Vorsteuerung einen Vorsteuerwert ermittelt. Ein Beobachter ist dazu ausgebildet, Schätzwerte von Motorströmen zu ermitteln. Eine Differenz zwischen dem Sollwert und einem einen Istwert bildenden Schätzwert des Motorstroms wird als Regeldifferenz einem Regler zugeführt. Bei einem anderen Ausführungsbeispiel erfolgt eine istwertbasierte Regelung, wobei durch eine Beobachtereinrichtung auch Schätzwerte erzeugt werden, die für eine Sensorüberprüfung verwendet werden.

In der JP 2007124722 A ist eine istwertbasierte Regelung für eine elektrische Maschine beschrieben, bei welcher zusätzlich geschätzt wird, ob sich die elektrische Maschine in der Sättigung befindet.

Eine der Erfindung zugrunde liegende Aufgabe besteht darin, das Führungsverhalten einer Antriebsregelung einer elektrischen Maschine zu verbessern.

Die Aufgabe wird durch ein Verfahren zum Regeln einer ₈e-triebsgröße einer elektrischen Maschine gemäß Patentanspruch 1, eine Antriebsregelung gemäß Patentanspruch 10 sowie ein Computerprogrammprodukt gemäß Patentanspruch 11 gelöst. Vorteilhafte Weiterbildungen des Verfahrens sind durch die Unteransprüche gegeben.

Durch das erfindungsgemäße Verfahren wird eine Betriebsgröße einer elektrischen Maschine geregelt, also eine physikalische Größe, die während des Betriebs der Maschine geändert werden kann. So kann durch das Verfahren z.B. eine Drehzahl, ein Drehmoment oder ein Spulenstrom geregelt werden. Das Verfahren eignet sich insbesondere dazu, als Betriebsgröße einen momentenbildenden Anteil eines Stroms der elektrischen Maschine im Zusammenhang mit einer feldorientierten Regelung, also einer Vektorregelung, zu regeln. Die zugehörige Stellgröße, die durch das Verfahren in diesem Fall eingestellt wird, ist dann die q-Komponente einer Steuerspannung, die als komplexer Raumzeiger definiert ist.

Beim erfindungsgemäßen Verfahren ist vorgesehen, dass in einer Antriebsregelung eine Reglerstruktur oder eine Reglereinrichtung (oder kurz ein Regler) bereitgestellt ist, der einen Regelwert als eine erste Stellgröße an einem Stellausgang erzeugt, sodass über den Stellausgang die erwähnte Stellgröße der elektrischen Maschine in an sich bekannter Weise eingestellt wird. Der Antriebsregelung kann dabei in ebenfalls bekannter Weise ein Sollwert für die Betriebsgröße an einen Sollwert-Eingang vorgegeben werden. Da das Verfahren auf unterschiedlichen Ebenen einer Reglerkaskade eingesetzt werden kann, kann es sich bei dem Sollwert entsprechend um eine Drehzahl, ein Drehmoment, oder aber auch, wie bereits oben beschrieben, um einen vorgegebenen momentenbildenden Anteil eines Stroms der elektrischen Maschine handeln. Um nun nach Empfang eines Sollwerts die entsprechende Betriebsgröße der elektrischen Maschine möglichst schnell auf diesen Sollwert einzustellen, wird bei einem erfindungsgemäßen Verfahren an dem Stellausgang zunächst kein Reglerwert durch den Regler, sondern ein Vorsteuerwert durch eine Vorsteuereinrichtung als eine zweite Stellgröße erzeugt. Mit anderen Worten wird der Sollwert nicht eingeregelt, sondern durch eine Steuerung ohne den Bedarf einer Rückkopplung eines Istwerts in Abhängigkeit von dem Sollwert angesteuert, indem am Stellausgang ein entsprechender Vorsteuerwert für die Stellgröße ausgegeben wird. Bei dem erfindungsgemäßen Verfahren ergibt sich hierbei aber nicht das aus dem Stand der Technik im Zusammenhang mit der Vorsteuerung bekannte Problem: Dem Steuerwert wird nämlich zusätzlich ein sich in der elektrischen Maschine ergebender Istwert der Betriebsgröße geschätzt. Dazu wird in der Antriebsregelung eine hier als Schätzeinrichtung bezeichnete Einrichtung bereitgestellt.

Im Unterschied zu einer tatsächlichen Messung des Istwerts, wie er bei einer Reglereinrichtung durch eine Messeinrichtung ermittelt wird, ist durch die Schätzeinrichtung die Schätzung auf der Grundlage einer Berechnung, d.h. ohne signifikanten Zeitversatz möglich. Nach der Ausgabe des Vorsteuerwerts über den Stellausgang liegt also in der Antriebsregelung auch gleich ein geschätzter Istwert vor, an dem erkannt werden kann, ob die Vorsteuerung erfolgreich war, also die Betriebsgröße auch tatsächlich auf den vorgegebenen Sollwert eingestellt werden konnte. Dies wird von der Vorsteuereinrichtung überprüft, indem sie die Differenz zwischen dem Sollwert und dem geschätzten Istwert bildet und in Abhängigkeit von der Differenz einen weiteren Vorsteuerwert erzeugt. Konnte also durch Erzeugen und Ausgeben des ersten Vorsteuerwerts die Betriebsgröße nicht auf den gewünschten Sollwert eingestellt werden, wird die elektrische Maschine über weiteren Vorsteuerwert nochmals durch die Vorsteuerung und nicht durch den Regler eingestellt. Mit anderen Worten wird durch das erfindungsgemäße Verfahren eine dynamische Vorsteuerung realisiert, die den Vorsteuerwert notfalls anpasst, sodass auch in einer Stellbegrenzung die dann verbleibende maximal mögliche Bandbreite im Führungsverhalten durch die Vorsteuerung realisiert werden kann.

Während die Vorsteuereinrichtung die Betriebsgröße der elektrischen Maschine durch Ausgeben eines oder mehrerer Vorsteuerwerte auf den Sollwert einsteuert, sollte die Reglereinrichtung zweckmäßigerweise nicht auf die Sollwertänderung reagieren, um eine Überlagerung der Vorsteuerung und der Regelung zu vermeiden. Hierzu ist gemäß dem erfindungsgemäßen Verfahren vorgesehen, den am Sollwert-Eingang empfangenen Sollwert nicht unmittelbar der Reglereinrichtung zuzuführen. Stattdessen wird der geschätzte Istwert, wie ihn die Schätzeinrichtung erzeugt, der Reglereinrichtung als Regler-Sollwert zugeführt. Hierdurch ergibt sich der Vorteil, dass der Regler-Sollwert nur demjenigen Anteil des am Eingang empfangenen Sollwerts entspricht, welcher nicht erfolgreich durch die Vorsteuereinrichtung innerhalb des gerade ausgeführten Taktzyklus in der elektrischen Maschine umgesetzt werden konnte. Der Regler-Sollwert wird also automatisch in dem Maße angepasst, in welchem kein Regelungsbedarf mehr besteht, weil die Vorsteuerung bereits die Betriebsgröße anpassen konnte.

Erreicht wird die maximal mögliche Bandbreite gemäß einer Ausführungsform des erfindungsgemäßen Verfahrens dadurch, dass durch die Vorsteuereinrichtung der Vorsteuerwert mittels eines Modells der elektrischen Maschine bestimmt wird, welches bevorzugt das elektrische Verhalten von Energiespeichern der Maschine, also von deren Induktivität (insbesondere der Querinduktivität), nachbildet. Des Weiteren ist zu berücksichtigen, dass sich als immanente Grenze für die maximal erreichbare Bandbreite in einer digitalen Antriebsvorrichtung die Zeitdauer der Ausgabetakte ergibt, mit denen am Stellausgang das Einstellen der Stellgröße durchgeführt wird. Deshalb wird durch die Vorsteuereinrichtung als Vorsteuerwert stets derjenige Wert bestimmt, der nötig ist, um gemäß dem Modell die Betriebsgröße der elektrischen Maschine innerhalb der Zeitdauer eines solchen Taktes einzustellen.

Indem die Schätzeinrichtung hierzu gleich berechnet, ob sich innerhalb der Zeitdauer auch tatsächlich der gewünschte Sollwert der Betriebsgröße einstellt, wird überwacht, ob der Steuervorgang tatsächlich erfolgreich war, ob also beispielsweise der Strom in der elektrischen Maschine den gewünschten momentenbildenden Anteil aufweist. Der von der Schätzeinrichtung gebildete geschätzte Istwert, beispielsweise betreffend den Stromaufbau, wird bevorzugt berechnet, indem die Beschaffenheit der Leistungsversorgung, also etwa des Frequenzumrichters mit Zwischenkreis, berücksichtigt wird. Um dies zu ermöglichen, wird ein Wert der höchstens von dieser Leistungsversorgung an die elektrische Maschine abgebbaren elektrischen Spannung vorgegeben. Erfordert nun der von der Vorsteuereinrichtung ausgegebene Vorsteuerwert eine elektrische Spannung, die größer als die höchstens zuführbare Spannung ist, so wird dies durch die Schätzeinrichtung erkannt und entsprechend in dem geschätzten Istwert wiedergespiegelt.

Die Schätzeinrichtung kann in gleicher Weise auch ein aufgrund von z.B. mechanischen Belastungsgrenzen maximal von der elektrischen Maschine abgebbares Drehmoment bei einer Drehzahlregelung berücksichtigen.

Die Schätzeinrichtung kann den Istwert beispielsweise mittels eines gemeinsamen Modells für die elektrische Maschine und die Leistungsversorgung schätzen. Solche Modelle sind mathematisch sehr genau herleitbar und ermöglichen es, die Vorgänge in der elektrischen Maschine sehr genau nachzubilden. Um hierbei den Berechnungsaufwand für eine Schätzung des Istwerts während des Betriebs der Antriebsregelung gering zu halten, hat sich die Verwendung von Kennlinien als zweckmäßig bewährt. Hierdurch kann dann eine Begrenzung der Vorsteuerung aufgrund einer zu geringen Spannungsreserve des Zwischenkreises oder allgemein einer Spannungsversorgung durch einfaches Auslesen der Kennlinienwerte erkannt werden.

Die Schätzeinrichtung kann entweder dazu ausgelegt sein, den Vorsteuerwert von der Vorsteuereinrichtung zu empfangen oder, falls keine Übertragung des Vorsteuerwerts an die Schätzeinrichtung möglich ist, den Vorsteuerwert durch Berechnen oder durch Schätzen zu ermitteln.

Ganz besonders vorteilhaft ist es, wenn der Reglereinrichtung der Regler-Sollwert, d. h. der geschätzte Istwert, über ein Totzeitglied zugeführt wird, welches den geschätzten Istwert um eine vorbestimmte Messzeitverzögerung und/oder eine vorbestimmte Stellzeitverzögerung verzögert. Mit Messzeit ist hierbei diejenige Zeitdauer gemeint, die von der Messeinrichtung des Reglers benötigt wird, um einen tatsächlichen Istwert an der elektrischen Maschine zu erfassen. Die Stellzeit ist diejenige Zeitdauer, die benötigt wird, um einen am Stellausgang der Antriebsreglervorrichtung erzeugten Stellwert (sei es ein Vorsteuerwert oder ein Regelwert) in eine wirksame, analoge Stellgröße der elektrischen Maschine umzuwandeln. Durch das Totzeitglied wird erreicht, dass an der Reglereinrichtung der Regler-Sollwert zum selben Zeitpunkt eintrifft, wie die gemessenen Istwerte zum Bilden des Regelwerts. Bei der Reglereinrichtung stimmen also bei erfolgreicher Vorsteuerung der Regler-Sollwert und der Istwert überein, so dass die Reglereinrichtung von selbst während der Vorsteuerung nicht auf einen geänderten Sollwert reagiert.

Die Verzögerung muss dabei im Falle eines getakteten, digitalen Systems nicht unbedingt synchron zur Taktzeit dieser Taktung erfolgen. Je nach Messzeitverzögerung kann es sich auch als vorteilhaft erweisen, durch das Totzeitglied den geschätzten Ist-Wert z. B. um eine Halbe Taktzeit oder allgemein um einen Bruchteil einer solchen Taktzeit zu verzögern, wobei mit Bruchteil hier ein Wert gemeint ist, der keine ganze Zahl ist.

Das erfindungsgemäße Verfahren lässt sich automatisiert durch eine Antriebsregelung durchführen, die ebenfalls Bestandteil der Erfindung ist. Die erfindungsgemäße Antriebsregelung umfasst eine Prozessorvorrichtung, also z.B. einen Mikrocontroller oder einen ASIC (application specific integrated circuit), wobei diese Prozessoreinrichtung dazu ausgerichtet ist, eine Ausführungsform des beschriebenen erfindungsgemäßen Verfahrens durchzuführen.

Das Verfahren eignet sich aber auch dazu, in eine bereits in einer Fabrikanlage oder dergleichen installierten Antriebsregelung implementiert zu werden. In diesem Zusammenhang umfasst die Erfindung einen hier als Computerprogrammprodukt bezeichneten Speicher aus einem oder mehreren Speichermedien, wobei auf einem oder mehreren dieser Speichermedien ein Programm gespeichert ist, welches dazu eingerichtet ist, bei Ausführung durch einen vorbestimmten Typ von Prozessoreinrichtung die Durchführung einer Ausführungsform des beschriebenen erfindungsgemäßen Verfahrens zu bewirken.

Im Folgenden wird die Erfindung anhand eines konkreten Ausführungsbeispiels noch näher erläutert. Dazu zeigt:

FIG 1   ein Diagramm, welches einen zeitlichen Verlauf einer q-Komponente eines Stromes einer elektrischen Maschine zeigt, wie er sich bei einer Regelung gemäß dem Stand der Technik ergibt,

FIG 2   ein schematisiertes Blockschaltbild einer bevorzugten Ausführungsform der erfindungsgemäßen Antriebsregelung,

FIG 3   ein Diagramm, welches einen zeitlichen Verlauf einer q-Komponente eines Stromes einer elektrischen Maschine zeigt, wie er sich bei Verwendung der Antriebsregelung von FIG 2 ergibt,

FIG 4   ein Diagramm, welches einen zeitlichen Verlauf einer q-Komponente des Stromes bei Verwendung der Antriebsregelung von FIG 2 ergibt, wenn eine Stellbegrenzung vorliegt.

Bei dem im Folgenden erläuterten Beispiel stellen die hier in Kombination beschriebenen Komponenten der Antriebsregelung jeweils einzelne, unabhängig voneinander zu betrachtende Merkmale der Antriebsregelung dar, welche die Antriebsregelung jeweils auch unabhängig voneinander weiterbilden und damit auch einzeln oder in einer anderen als der gezeigten Kombination als Bestandteil der Erfindung anzusehen sind.

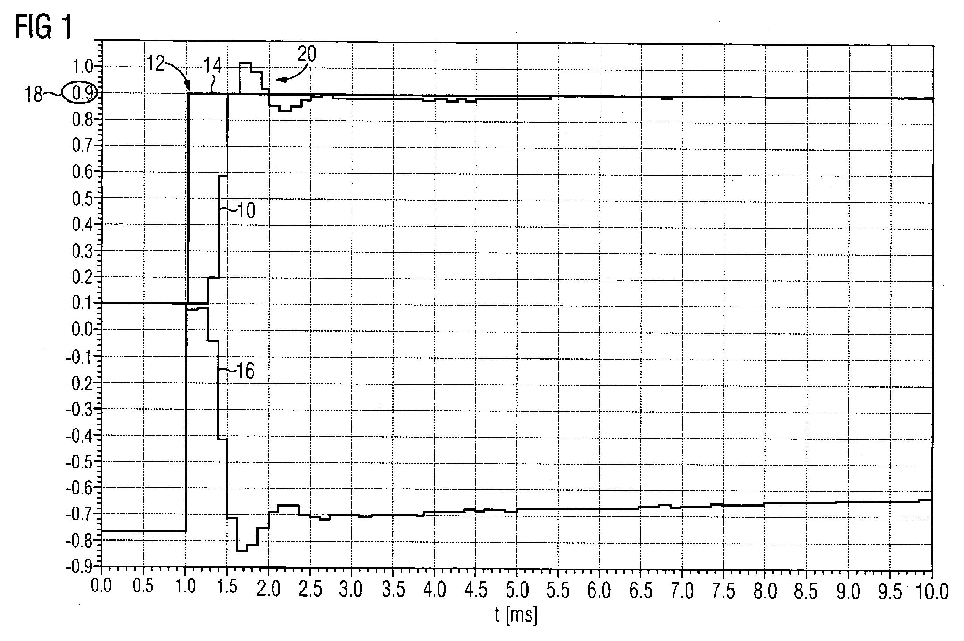

Zur Verdeutlichung der Funktionsweise der erfindungsgemäßen Antriebsregelung ist in FIG 1 zunächst ein zeitlicher Verlauf eines Messsignals oder Istwert-Signals 10 über der Zeit t gezeigt, wie ihn eine q-Komponente eines Statorstromes einer Drehfeldmaschine aufweisen kann, wenn der Statorstrom allein durch einen Regler, beispielsweise einen PI-Regler, geregelt wird. Das Ist-Wert-Signal 10 umfasst einzelne Messwerte, die von einer Messeinrichtung des Reglers, beispielsweise einem Stromwandler, in der Drehfeldmaschine gemessen werden. Die Einheiten der Ordinate des Diagramms stellen eine normierte Stromstärke dar. In dem Diagramm von FIG 1 ist noch das Reglersignal 16 dargestellt, welches sich aus einer Abfolge von digitalen Regelwerten zusammensetzt und welches die Stellgröße des Regelkreises bildet.

Der Verlauf des Istwert-Signals 10 ergibt sich als Reaktion auf einen Sprung 12 eines Sollwert-Signals 14 auf einen neuen Sollwert 18 an einem Regler-Eingang. Bei der in FIG 1 veranschaulichten Regelung handelt es sich um ein digitales System, bei dem Sollwert und Messwerte gemäß einer Taktung über Analog-Digitalwandler empfangen und über Digital-Analogwandler ausgegeben werden. Entsprechend ergibt sich der gestufte Verlauf des Istwert-Signals 10 und des Reglersignals 16.

Das Reglersignal 16 zeigt, wie der Regler zum Einregeln des Istwert-Signals 10 auf den Sollwert 18 mehrere Taktzyklen (1 ms bis 1.5 ms) benötigt, wobei eine Taktzeit ca. 125 µs beträgt. Zudem ergibt sich nach erstmaligem Erreichen des Sollwerts 18 ein Überschwingen 20, d.h. das Istwert-Signal 10 pendelt sich auf den Sollwert 18 erst nach ca. 2 ms ein. Ein konventioneller Regler ist nämlich beim Einregeln des Sollwerts auf gemessene Istwerte angewiesen, die in der Regel aufgrund von Totzeiten bei der Messung nur verzögert bereitstehen, so dass in der Regel ein Überschwingen oder sogar ein Dauerschwingen resultiert.

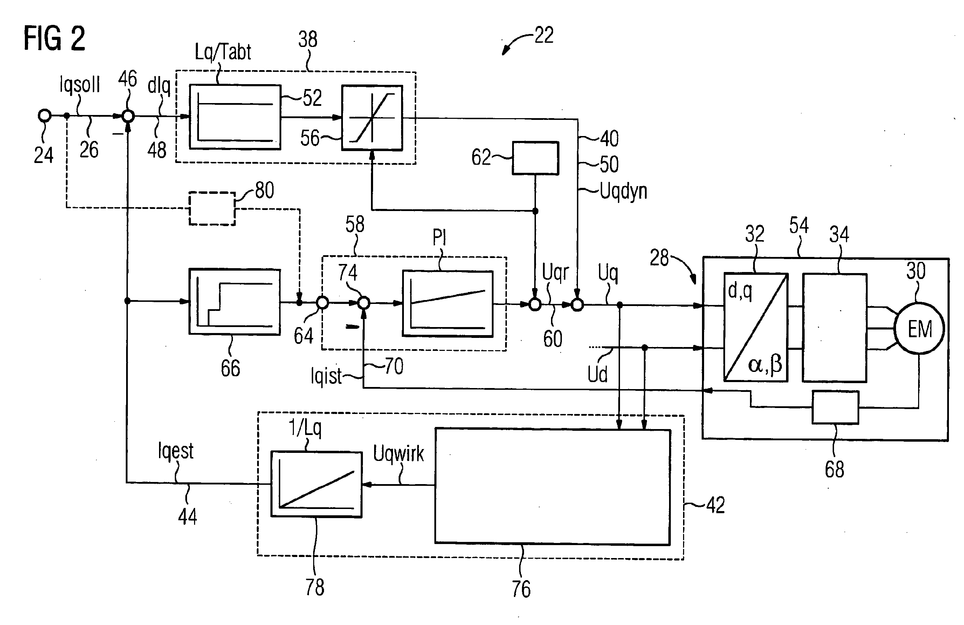

Die in FIG 2 gezeigte Antriebsregelung 22 weist eine deutlich größere Bandbreite im Führungsverhalte auf.

Die Antriebsregelung 22 kann an einem Sollwert-Eingang 24 ein Sollwert-Signal Iqsoll empfangen, das im gezeigten Beispiel aus einzelnen digitalen Sollwerten 26 gebildet ist. Die Sollwerte 26 können beispielsweise von einem (nicht dargestellten) Drehzahlregler oder Momentenregler einer Reglerkaskade erzeugt werden. Die Antriebsregelung erzeugt in Abhängigkeit von den Sollwerten 26 an einem Stellausgang 28 digitale Werte für eine q-Komponente Uq und eine d-Komponente Ud einer komplexen Spannung U, d.h. einen Raumzeiger. Die komplexe Spannung U stellt eine Stellgröße für eine feldorientierte Regelung einer elektrischen Maschine 30 dar. Dem Stellausgang 28 ist eine Transformationseinrichtung 32 nachgeschaltet, welche aus der komplexen Spannung U reellwertige Stellgrößen für einen Steuersatz 34 eines Stromrichters oder Wechselrichters erzeugt. Der Steuersatz 34 führt der elektrischen Maschine 30 in Abhängigkeit von diesen Stellgrößen einen Drehstrom zu, wofür der Steuersatz 34 aus einem (nicht dargestellten) Zwischenkreis eines Frequenzumrichters mit elektrischer Energie versorgt wird. Die einzelnen Komponenten der Antriebsregelung 22 können in der in FIG 2 dargestellten Weise miteinander verknüpft sein.

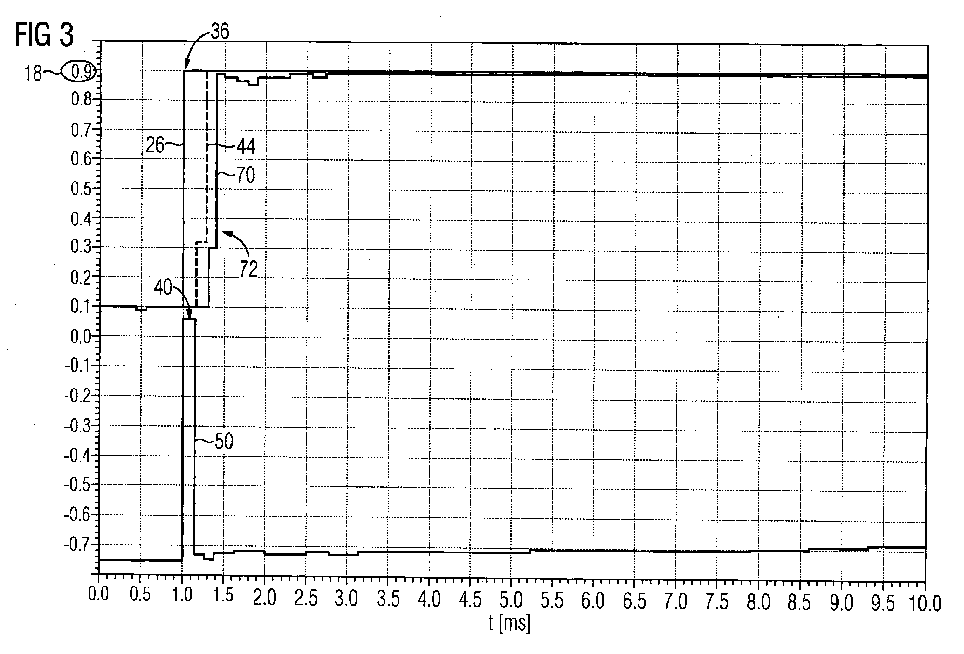

Im Folgenden ist anhand von FIG 2 und FIG 3 die Funktionsweise der Ansteuerregelung 22 erläutert. In FIG 3 ist hierzu die Folge der Sollwerte 26 über der Zeit t aufgetragen, sodass sich der zeitliche Verlauf des Sollwertsignals Iqsoll ergibt. Wie der stufige Verlauf der Zeitverläufe in FIG 3 zeigt, weist das digitale System der Antriebsregelung 22 eine Taktung auf, deren Taktdauer in diesem Beispiel 125 Mikrosekunden beträgt.

Für die Beschreibung der Funktionsweise sei hier angenommen, dass sich die Sollwerte 26 sprunghaft ändern, so dass ein Sollwertsprung 36 am Sollwert-Eingang 24 von der Antriebsregelung 22 beobachtet wird. Eine dynamische Spannungsvorsteuerung 38 erzeugt hierauf unmittelbar einen Vorsteuerwert 40, der als Bestandteil eines Vorsteuersignals Uqdyn als Steuerwert für die Komponente Uq am Stellausgang 28 ausgegeben wird.

Zusätzlich berechnet zu dem Vorsteuerwert 40 eine Schätzeinrichtung 42 ein Schätzsignal Iqest aus geschätzten Istwerten 44. Der zu dem Vorsteuerwert 40 berechnete Istwert wird eine Abtastdauer nach der Ausgabe des Vorsteuerwerts 40 ausgegeben, wodurch angezeigt wird, dass es sich hierbei um die Schätzung desjenigen Istwerts handelt, den die q-Komponente des Stroms in der elektrischen Maschine 30 einen Takt nach der Beaufschlagung mit der durch den Vorsteuerwert 40 eingestellten Stellgröße eingenommen hat. Die geschätzten Istwerte 44 werden von den Sollwerten 26 durch einen Subtrahierer 46 voneinander subtrahiert, woraus Differenzwerte 48 eines Differenzsignals dIq erzeugt werden. Die Differenzwerte 48 bilden die Eingangswerte der Spannungsvorsteuerung 38. Aus den Differenzwerten 48 berechnet die Spannungsvorsteuerung 38 weitere Vorsteuerwerte 50.

Der Vorsteuerwert 40 und die weiteren Vorsteuerwerte 50 werden auf der Grundlage eines Modells 52 der Vorsteuerung 38 berechnet, das nur die Energiespeicher der sich insgesamt ergebenden Regelstrecke 54 nachbildet, also keine Mess- oder Stellverzögerungen. Der wesentliche Energiespeicher ist hier durch die bei der feldorientierten Regelung wirksamen Querinduktivität Lq der Spulen der elektrischen Maschine 30 gebildet. Das Stellsignal Uqdyn wird hierbei gemäß der folgenden Gleichung berechnet:

$$Uqdyn = Lq * dIq / Tabt,$$

wobei Tabt die Zeitdauer eines Zeittakts des digitalen Systems (Abtastdauer) angibt. Der Vorsteuerwert des Modells 52 wird noch durch einen Begrenzer 56 begrenzt, wodurch vermieden wird, das Komponenten der Regelstrecke 54 an ihre mechanische oder elektrische Grenze gesteuert und hierdurch beschädigt werden.

Die Antriebsregelung 22 weist neben der Spannungsvorsteuerung 38 einen Regler 58 auf, der beispielsweise ein PI-Regler sein kann. Der Regler 58 erzeugt Regelwerte 60 am Stellausgang 28, durch die ebenfalls die q-Komponente Uq gebildet ist. Insgesamt ergibt sich durch die Regelwerte 60 das Reglersignal Uqr. Die Antriebsregelung 22 kann zusätzlich auch eine stationäre Spannungsvorsteuerung 62 aufweisen, über welche derjenige Anteil des Stellsignals, die q-Komponente Uq, eingestellt werden kann, der für die Aufrechterhaltung des stationären Betriebs der elektrischen Maschine 30 notwendig ist.

Während der Ausgabe des Vorsteuerwerts 40 ist der Regler 58 dahingehend deaktiviert, dass durch den Regler 58 nicht zeitgleich mit der Spannungsvorsteuerung 38 ein Anteil des Stellsignals Uq verändert wird, um dem Sollwertsprung 36 zu folgen. Hierzu empfängt der Regler 58 einen Regler-Sollwert 64 über ein Totzeitglied 66, welches mit der Schätzeinrichtung 42 verbunden ist. Durch das Totzeitglied 66 werden die geschätzten Istwerte 44 dem Regler 58 als Regler-Sollwert 64 mit einer Verzögerung von in diesem Beispiel anderthalb Taktzyklen (Dauer eines Taktzyklus = 125 Mikrosekunden) zugeführt. Diese Zeitdauer setzt sich aus zwei Größen zusammen. Zum einen benötigt eine Messeinrichtung 68 hier eine Taktdauer an Zeit, um in der elektrischen Maschine 30 eine Veränderung der tatsächlichen Stromstärke (in diesem Fall dessen q-Komponente) zu ermitteln. Die Messwerte 70 der Messeinrichtung 68 bilden zusammen das gemessene Istwertsignal Iqist. Sie sind in FIG 3 ebenfalls dargestellt. Zum anderen ist die Stellzeit berücksichtigt, die hier eine halbe Taktdauer betragen kann, falls über den Digital-Analogwandler nicht an der Abtastgrenze des Analog-Digitalwandlers gestellt wird.

Der Verlauf der geschätzten Istwerte 44 stimmt mit dem Verlauf der gemessenen Istwerte 70 während des Stromaufbaus 72 nahezu vollständig überein. Durch die Verzögerung mittels des Totzeitglieds 66 werden die geschätzten Istwerte 44 um die Messverzögerung und die Stellverzögerung verzögert, sodass an einem Subtrahierer 74 des Reglers 58 während des Stromanstiegs 72 stets eine Regelabweichung ermittelt wird, die nahezu gleich Null ist. Dies sorgt dafür, dass der Regler 58 nach dem Sollwertsprung 36 unveränderte Regelwerte 60 ausgibt, d. h. keine Reaktion auf den Sollwertsprung 36 zeigt.

Ein Vergleich des Verlaufs 10 von FIG 1 mit dem Verlauf der Istwerte 70 in FIG 3 zeigt zudem, dass mittels der dynamischen Vorsteuerung 38 der gewünschte Stromsollwert 18 schnellstmöglich und ohne Überschwingen erreicht wird. Ohne eine Stellbegrenzung, wie sie beispielsweise durch Begrenzung der Spannungsversorgung aus dem Zwischenkreis an den Wechselrichter 34 verursacht werden kann, kann die Reglerbandbreite also stark erhöht werden. Es reicht die Ausgabe eines einzigen Vorsteuerwerts 40. Hierzu werden bei der dynamischen Spannungsvorsteuerung 38 die geschätzten Istwerte 44 mit dem Sollwert 26 mittels des Subtrahierers 46 verglichen und daraus die Vorsteuerwerte 40 und 50 in der Weise ermittelt, wie sie nötig sind, um innerhalb eines einzigen Taktzyklus den gewünschten Sollwert 18 zu erreichen. Dies ist die bevorzugte Wahl der Vorsteuerung. Es können aber auch aufgrund anderer Randbedingungen auch mehrere Taktzyklen vorgesehen werden.

Die so ermittelte komplexe Spannung U kann aber größer als die Spannungsstellreserve sein, die bei einem gegebenen Betriebspunkt der elektrischen Maschine 30 in dem Zwischenkreis oder eine andere Komponente der Spannungsversorgung der elektrischen Maschine 30 noch zur Verfügung steht. Bei der Antriebsregelung 22 führt dies allerdings nicht zu dem aus dem Stand der Technik bekannten Nachteil eines degenerierten Führungsverhaltens. Stattdessen wird im Falle einer solchen Stellbegrenzung sogar das Überschwingen verhindert, wie es sich bei einem konventionellen Regler (siehe FIG 1, Überschwingen 20) ergibt.

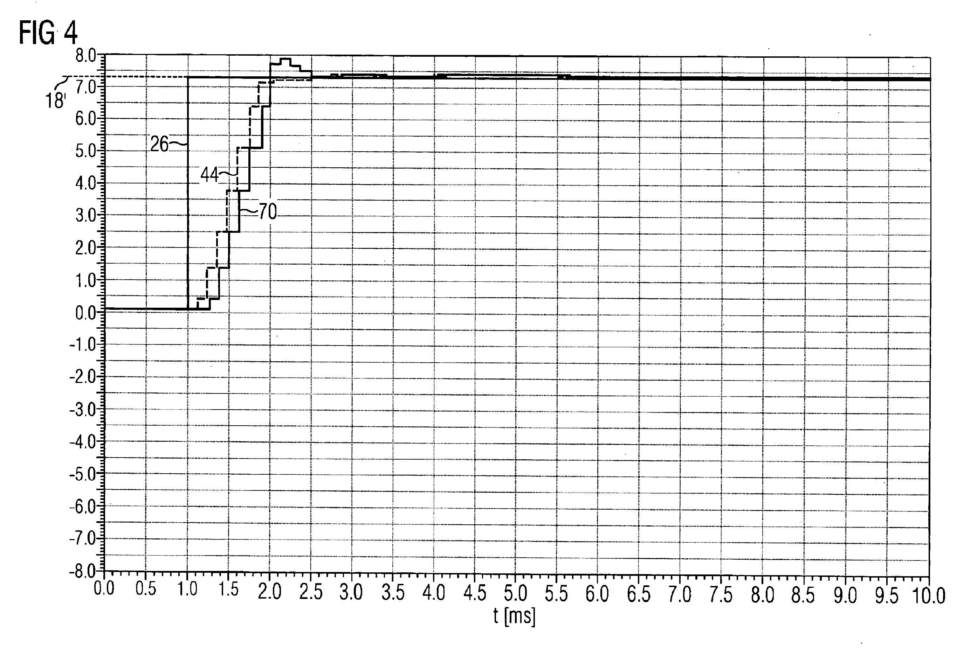

Wie dies erreicht wird, ist im Folgenden anhand von FIG 2 und FIG 4 erläutert. In FIG 4 ist hierzu noch einmal der Verlauf der Istwerte 26 aufgetragen, wobei der in FIG 4 gezeigte Sollerwertsprung auf einen wesentlich größeren Sollwert 18' erfolgt. Zu diesem Sollwertsprung sind wieder die geschätzten Istwerte 44 und der Verlauf der gemessenen Istwerte 70 gezeigt. Durch die Schätzeinrichtung 42 wird erkannt, dass sich am Wechselrichter 34 eine Stellbegrenzung aufgrund der begrenzten Spannung des Zwischenkreises ergibt. Entsprechend benötigt die dynamische Spannungsvorsteuerung 38 mehrere Taktzyklen, um den Sollwert 18' einzuregeln.

Damit durch die Schätzeinrichtung 42 die Stellbegrenzung erkannt und in den geschätzten Istwerten 44 widergespiegelt werden kann, weist die Schätzeinrichtung 42 ein Modell 76 für die Berechnung der tatsächlich wirksamen Spannung Uqwirk auf. Durch das Modell 76 ist die maximal verfügbare Spannung der Leistungsversorgung, also etwa des Zwischenkreises, berücksichtigt. Aus dem Modell 76 wird in Abhängigkeit von einer Schätzung des aktuellen Betriebszustands der elektrischen Maschine 30 und der übrigen Komponenten der Regelstrecke 54 ein Signal der sich effektiv ergebenden momentenbildenden Steuerspannung Uqwirk berechnet. Das Modell 76 empfängt hierzu als Eingangswert die tatsächlich wirksamen Vorsteuerwerte 40 und 50. Diese stehen in dem in FIG 2 gezeigten Beispiel direkt zur Verfügung. Stehen sie nicht zur Verfügung, so werden sie berechnet oder geschätzt. Das Modell kann auf einer mathematischen Berechnungsvorschrift für die momentenbildende Steuerspannung Uqwirk oder auf in einem Speicher abgespeicherte Kennlinien beruhen. Beide können anhand von an sich bekannten Methoden hergeleitet werden.

Auf der Grundlage eines nachgeschalteten Modells 78 wird durch die Schätzeinrichtung 42 der Stromaufbau bzw. der Stromabbau in der elektrischen Maschine 30 berechnet. Durch das Modell 78 wird die effektive Steuerspannung Uqwirk zu der sich ergebenden geschätzten q-Komponente des Stroms in der elektrischen Maschine 30 aufintegriert. Für den Fall, dass eine stationäre Spannungsvorsteuerung 62 bereitgestellt ist, braucht das Modell 78 kein PT1-Glied umfassen, da der Spannungsaufbau am Ständerwiderstand nicht mitgeregelt werden muss. Die geschätzte effektive Steuerspannung Uqwirk ist für den Fall, dass die Leistungsfähigkeit der Leistungsversorgung erschöpft ist, kleiner als der gewünschte Steuerspannungswert Uq. Das Modell 78 berücksichtigt den Energiespeicher der Regelstrecke 54, also die Querinduktivität Lq. Die Mess- und Stellverzögerungen sind aber nicht berücksichtigt, sodass die geschätzten Istwerte 44 vor den gemessenen Istwerten 70 bereitstehen und so durch die dynamischen Spannungsvorsteuerung 38 sehr viel schneller auf die Spannungsbegrenzung reagiert werden kann.

Bei dem Antriebsregler 22 kann zusätzlich eine Überwachungseinrichtung 80 vorgesehen sein, die bei extremer Übersteuerung (Uq >> Uqwirk) die Sollwerte 26 unmittelbar dem Regler-Sollwerteingang als Regler-Sollwert 64 zuführt, sodass der Regler 58 allein, ohne die dynamische Spannungsvorsteuerung 38 und unverzögert auf die Regelstrecke 54 wirkt. Die extreme Übersteuerung wird hier durch einen festzulegenden Grenzwert definiert.

In Bezug auf eine bauliche Realisierung der Antriebsregelung 22 kann das in FIG 2 gezeigte Blockschaltbild der Antriebsregelung 22 beispielsweise in Form von separaten oder integrierten analogen oder digitalen Schaltkreisen realisiert sein. Insbesondere können bei der Antriebsregelung 22 auch alle oder einige der Einrichtungen durch Programme einer digitalen Prozessoreinheit, z.B. eines Digitalprozessors (DSP), eines Mikrocontrollers, eines ASICs, eines FPGAs (field programmer gate array) oder einer Kombination daraus realisiert sein.

Insgesamt ist durch das Beispiel gezeigt, wie ein Verfahren zur dynamischen Spannungsvorsteuerung für einen Stromregler bereitgestellt werden kann, das auch in der Stellbegrenzung genutzt werden kann, ohne hierbei die Nachteile des Stands der Technik aufzuweisen. Damit kann der Strom in einer elektrischen Maschine zeitoptimal schnell und ohne Überschwingen auf einen gewünschten Sollwert aufgebaut bzw. abgebaut werden. Es ist möglich, hierbei die maximal mögliche Bandbreite (Shannon-Grenze) im Führungsverhalten des Stromreglers zu erreichen. Durch die beschriebene Kombination von Steuerung und Regelung werden Vorteile beider Verfahren kombiniert.

**Patentansprüche**

1. Verfahren zum Regeln einer Betriebsgröße einer elektrischen Maschine (30) mittels einer Antriebsregelung (22), indem bei der Antriebsregelung (22) ein Sollwert (26) für die Betriebsgröße an einem Sollwert-Eingang (24) empfangen wird, durch eine Reglereinrichtung (58) ein Regelwert (60) an einem Stellausgang (28) erzeugt wird und hierdurch über den Stellausgang (28) eine Stellgröße der elektrischen Maschine (30) eingestellt wird, wobei in Abhängigkeit von dem Sollwert (26) zunächst durch eine Vorsteuereinrichtung (38) ein Vorsteuerwert (40) an dem Stellausgang (28) erzeugt wird und zu dem Vorsteuerwert (40) zusätzlich durch eine Schätzeinrichtung (42) ein sich in der elektrischen Maschine (30) ergebender Istwert (44) der Betriebsgröße geschätzt wird

**dadurch gekennzeichnet , dass**

der geschätzte Istwert (44) der Reglereinrichtung (58) als Regel-Sollwert an einem Reglereingang (64) zugeführt und durch die Reglereinrichtung (58) der Regelwert (60) durch einen Abgleich mit einem durch eine Messeinrichtung ermittelten Istwert (70) der zu regelnden Betriebsgröße erzeugt wird und durch die Vorsteuereinrichtung (38) ein weiterer Vorsteuerwert (50) aus der Differenz (48) zwischen dem Sollwert (26) und dem geschätzten Istwert (44) erzeugt wird.

2. Verfahren nach Anspruch 1, wobei am Stellausgang (28) das Einstellen der Stellgröße getaktet durchgeführt wird und durch die Vorsteuereinrichtung (38) als der Vorsteuerwert (40, 50) mittels eines Modells (52) der elektrischen Maschine (30) derjenige Wert bestimmt wird, der nötig ist, um gemäß dem Modell (52) die Betriebsgröße innerhalb der Zeitdauer eines Taktes einzustellen.

3. Verfahren nach Anspruch 1 oder 2, wobei durch die Schätzeinrichtung (42) der geschätzte Istwert (44) in Abhängigkeit von einem Wert für ein von der elektrischen Maschine höchstens abgebbaren Drehmoment und/oder von einer der elektrischen Maschine (30) durch eine Leistungsversorgung höchstens zuführbaren elektrischen Spannung berechnet wird.

4. Verfahren nach einem der vorhergehenden Ansprüche, wobei der Reglereinrichtung (58) der Regler-Sollwert über ein Totzeitglied (66) zugeführt wird und hierdurch der geschätzte Istwert (44) um eine vorbestimmte Messzeitverzögerung und/oder eine vorbestimmte Stellzeitverzögerung verzögert wird.

5. Verfahren nach einem der vorhergehenden Ansprüche, wobei durch das Totzeitglied (66) der geschätzte Istwert (44) um einen Bruchteil einer Taktzeit einer Taktung verzögert wird, wobei der Bruchteil keine ganze Zahl ist.

6. Verfahren nach einem der vorhergehenden Ansprüche, wobei als Betriebsgröße ein momentenbildender Anteil eines Stroms der elektrischen Maschine (30) und als Stellgröße eine q-Komponente einer Steuerspannung für einen Raumzeiger einer Vektorregelung eingestellt wird.

7. Verfahren nach einem der vorhergehenden Ansprüche, wobei durch die Schätzeinrichtung (42) der Vorsteuerwert (40, 50) empfangen wird oder der Vorsteuerwert (40,50) durch Berechnen oder durch Schätzen ermittelt wird.

8. Verfahren nach einem der vorhergehenden Ansprüche, wobei durch die Schätzeinrichtung (42) der Istwert (44) mittels eines weiteren Modells (76,78) der elektrischen Maschine (30) geschätzt wird, wobei das weitere Modell (76,78) bevorzugt zumindest eine Kennlinie zu und/oder ein mathematisches Modell von der elektrischen Maschine (30) und einer elektrischen Leistungsversorgung der elektrischen Maschine (30) umfasst.

9. Verfahren nach einem der vorhergehenden Ansprüche, wobei durch eine Überwachungseinrichtung (80) überprüft wird, ob eine Differenz der über den Stellausgang (28) eingestellten Stellgröße, insbesondere eine Steuerspannung, und ein von der Leistungsversorgung der elektrischen Maschine (30) momentan tatsächlich bereitstellbarer Wert für die Stellgröße betragsmäßig größer als ein vorbestimmter Höchstwert ist und für diesen Fall der Sollwert (26) unverzögert an einem ReglerEingang (64) der Reglereinrichtung (58) bereitgestellt wird.

10. Antriebsregelung (22) zum Regeln einer Betriebsgröße einer elektrischen Maschine (30), umfassend eine Prozessoreinrichtung, die dazu eingerichtet ist, ein Verfahren nach einem der vorhergehenden Ansprüche durchzuführen.

11. Computerprogrammprodukt umfassend zumindest ein Speichermedium, wobei auf dem zumindest einen Speichermedium ein Programm gespeichert ist, welches dazu eingerichtet ist, bei Ausführung durch eine vorbestimmte Prozessoreinrichtung die Durchführung eines Verfahrens nach einem der Ansprüche 1 bis 9 zu bewirken.

**Claims**

1. Method for the regulation of an operating variable of an electric machine (30) by means of a drive regulator (22), in that at the drive regulator (22), a reference value (26) for the operating variable is received at a reference value input (24), a regulation value (60) is generated at a control output (28) by means of a regulator device (58) and a manipulated variable of the electric machine (30) is hereby set via the control output (28), wherein depending on the reference value (26) a precontroller value (40) is initially generated at the control output (28) by means of a precontroller device (38) and in addition to the precontroller value (40) an actual value (44) of the operating variable arising in the electric machine (30) is estimated by means of an estimating device (42), **char-**

**acterised in that** the estimated actual value (44) from the regulator device (58) is fed to a regulator input (64) as a regulation reference value and by means of the regulator device (58) the regulation value (60) is generated through comparison with an actual value (70) of the operating variable to be regulated which is determined by means of a measuring device and by means of the precontroller device (38) a further precontroller value (50) is generated from the difference (48) between the reference value (26) and the estimated actual value (44).

2. Method according to claim 1, wherein the adjustment of the manipulated variable is performed in a clocked manner at the control output (28) and via the precontroller device (38) and by means of a model (52) of the electrical machine (30) the value which is necessary to set the operating variable within the time period of a clock pulse in accordance with the model (52) is determined as the precontroller value (40, 50).

3. Method according to claim 1 or 2, wherein via the estimating device (42), the estimated actual value (44) is calculated depending on a value for a maximum torque which can be output by the electric machine and/or on a maximum electrical voltage which can be fed to the electric machine (30) by means of a power supply.

4. Method according to one of the preceding claims, wherein the regulation reference value is fed to the regulator device (58) via a lag element (66) and the estimated actual value (44) is hereby delayed by a predetermined measuring time delay and/or a predetermined setting time delay.

5. Method according to one of the preceding claims, wherein by means of the lag element (66), the estimated actual value (44) is delayed by a fraction of a clocking cycle time, wherein the fraction is not a whole number.

6. Method according to one of the preceding claims, wherein a moment-generating part of a current from the electric machine (30) is set as an operating variable and a q-component of a control voltage for a space vector of a vector controller as a manipulated variable.

7. Method according to one of the preceding claims, wherein the precontroller value (40, 50) is received by the estimating device (42) or the precontroller value (40, 50) is determined by means of calculation or estimation.

8. Method according to one of the preceding claims, wherein the actual value (44) is estimated by the estimating device (42) by means of a further model (76, 78) of the electric machine (30), wherein the further model (76, 78) preferably comprises at least one characteristic curve relating to and/or a mathematical model of the electric machine (30) and an electric power supply of the electric machine (30).

9. Method according to one of the preceding claims, wherein by means of a monitoring device (80) a check is performed as to whether a difference between the manipulated variable, in particular a control voltage, set via the control output (28), and a value for the manipulated variable currently actually capable of being made available by the power supply of the electric machine (30), is greater in size than a predetermined maximum value, and in this case the reference value (26) is made available without delay to a regulator input (64) of the regulator device (58).

10. Drive regulator (22) for regulation of an operating variable of an electric machine (30), comprising a processor device which is set up to perform a method according to one of the preceding claims.

11. Computer program product comprising at least one storage medium, wherein a program is stored on the at least one storage medium, which is set up to effect the performing of a method according to one of claims 1 to 9 upon its execution by a predetermined processor device.

**Revendications**

1. Procédé de régulation d'une grandeur de fonctionnement d'une machine ( 30 ) électrique, au moyen d'une régulation ( 22 ) d'entraînement, en recevant, lors de la régulation ( 22 ) d'entraînement, une valeur ( 26 ) de consigne de la grandeur de fonctionnement à une entrée ( 24 ) de valeur de consigne, en produisant, par un dispositif ( 58 ) formant régleur, une valeur ( 60 ) de réglage à une sortie ( 28 ) de réglage et en établissant ainsi, à la sortie ( 28 ) de réglage, une grandeur de réglage de la machine ( 30 ) électrique, dans lequel, en fonction de la valeur ( 26 ) de consigne, on produit d'abord, par un dispositif ( 38 ) de pilotage, une valeur ( 40 ) de pilotage à la sortie ( 28 ) de réglage et on évalue, en plus de la valeur ( 40 ) de pilotage, par un dispositif ( 42 ) d'évaluation, une valeur ( 44 ) réelle de la grandeur de fonctionnement provenant de la machine ( 10 ) électrique, **caractérisé en ce que** on envoie la valeur ( 44 ) réelle estimée au dispositif ( 58 ) formant régleur comme valeur de consigne de réglage à une entrée ( 64 ) du régleur et, par le dispositif ( 58 ) formant régleur, on produit la valeur ( 60 ) de réglage par une comparaison à une valeur ( 70 ) réelle, déterminée par un dispositif de mesure, de la grandeur de fonctionnement à réguler et, par le dispositif ( 38 ) de pilotage, on produit une autre valeur ( 50 ) de pilotage, à partir de la différence ( 48 ) entre la valeur ( 26 ) de consigne et la valeur ( 44 ) réelle estimée.

2. Procédé suivant la revendication 1, dans lequel on effectue, à la sortie ( 28 ) de réglage, le réglage en cadence de la grandeur de réglage et, par le dispositif ( 38 ) de pilotage, on définit, comme étant la valeur ( 40, 50 ) de pilotage, au moyen d'un modèle ( 52 ) de la machine ( 30 ) électrique, la valeur qui est nécessaire pour, suivant le modèle ( 52 ), régler la grandeur de fonctionnement pendant la durée d'une cadence.

3. Procédé suivant la revendication 1 ou 2, dans lequel, par le dispositif ( 42 ) d'estimation, on calcule la valeur ( 44 ) réelle estimée en fonction d'une valeur d'un couple de rotation pouvant être cédé au plus par la machine électrique et/ou d'une tension électrique pouvant être appliquée au plus à la machine ( 30 ) électrique par une alimentation de puissance.

4. Procédé suivant l'une des revendications précédentes, dans lequel on envoie, au dispositif ( 58 ) formant régleur, la valeur de consigne du régleur par un élément ( 66 ) de temps mort et on retarde ainsi la valeur ( 44 ) réelle estimée d'un retard de temps de mesure défini à l'avance et/ou d'un retard de temps de réglage défini à l'avance.

5. Procédé suivant l'une des revendications précédentes, dans lequel on retarde, par l'élément ( 66 ) de temps mort, la valeur ( 44 ) réelle estimée d'une fraction d'un temps d'un cadencement, la fraction n'étant pas un nombre entier.

6. Procédé suivant l'une des revendications précédentes, dans lequel on règle, comme grandeur de fonctionnement, une proportion formant un couple d'un courant de la machine ( 30 ) électrique et comme grandeur de réglage, une composante q d'une tension de commande pour un vecteur d'une régulation vectorielle.

7. Procédé suivant l'une des revendications précédentes, dans lequel, par le dispositif ( 42 ) d'estimation, on reçoit la valeur ( 40, 50 ) de pilotage ou on détermine la valeur ( 40, 50 ) de pilotage par calcul ou par estimation.

8. Procédé suivant l'une des revendications précédentes, dans lequel, par le dispositif ( 42 ) d'estimation, on estime la valeur ( 44 ) réelle au moyen d'un autre modèle ( 76, 78 ) de la machine ( 30 ) électrique, l'autre modèle ( 76, 78 ) comprenant au moins une courbe caractéristique et/ou un modèle mathématique de la machine ( 30 ) électrique et d'une alimentation en puissance électrique de la machine ( 30 ) électrique.

9. Procédé suivant l'une des revendications précédentes, dans lequel on contrôle, par un dispositif ( 80 ) de contrôle, si une différence entre la grandeur de réglage réglée par la sortie ( 28 ) de réglage, notamment une tension de commande, et une valeur de la grandeur de réglage, pouvant être mise à disposition, en fait momentanément, par l'alimentation en puissance de la machine ( 30 ) électrique, est plus grande en valeur absolue qu'une valeur très grande définie à l'avance et dans ce cas, on met à disposition la valeur ( 26 ) de consigne, sans délai, à une entrée ( 64 ) de régleur du dispositif ( 58 ) formant régleur.

10. Régulation ( 22 ) d'entraînement pour la régulation d'une grandeur de fonctionnement d'une machine ( 30 ) électrique, comprenant un dispositif à processeur qui est conçu pour effectuer un procédé suivant l'une des revendications précédentes.

11. Produit de programme d'ordinateur comprenant au moins un support de mémoire, dans lequel il est mémorisé, sur le au moins un support de mémoire, un programme qui est conçu pour faire, lorsqu'il est exécuté par un dispositif à processeur défini à l'avance, que s'effectue un procédé suivant l'une des revendications 1 à 9.

FIG 1

FIG 2

FIG 3

EP 2 626 999 B1

13

FIG 4

EP 2 626 999 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0568712 A1
- DE 102009043598 A1
- DE 102006006032 A1
- JP 2007124722 A